# EUROPÄISCHE PATENTANMELDUNG

(11) **EP 1 209 846 A1**
(43) Veröffentlichungstag der Anmeldung: **29.05.2002**
(21) Anmeldenummer: 00125996.9
(22) Anmeldetag: 28.11.2000
(51) Int. Cl.: H04L 9/32

(54) **Verfahren zum Sichern von Datenübertragungen sowie zugehörige Einheiten und zugehöriges Programm**

(71) Anmelder: SIEMENS AKTIENGESELLSCHAFT, 80333 München (DE)
(72) Erfinder: Hagn, Christine, 85375 Neufahrn (DE); Markwitz, Wernhard, Dr., 80469 München (DE)

(57) **Zusammenfassung**

Erläutert wird ein Verfahren, bei dem in einem Endgerät unter Verwendung eines geheimgehaltenen digitalen Schlüssels eine digitale Unterschrift (82) zu mindestens einem Endgerätedatum (HW-EG, SW-EG) erzeugt wird, welches das Endgerät spezifiziert. Bei der Datenübertragung mit einem Partnerendgerät wird neben dem Endgerätedatum auch die digitale Unterschrift (82) übertragen und im Partnerendgerät geprüft. Durch dieses Vorgehen lässt sich die Sicherheit bei der Datenübertragung erhöhen.

## Beschreibung

Die Erfindung betrifft ein Verfahren, bei dem ein Endgerät an ein Partnerendgerät digitale Nutzdaten sendet, die eine Anforderung festlegen. Zum Sichern der Datenübertragung wird vom Endgeräte eine digitale Unterschrift an das Partnerendgerät gesendet. Die digitale Unterschrift ist mit einem geheimgehaltenen Schlüssel erstellt worden. Das Partnerendgerät ist in der Lage, die digitale Unterschrift auch ohne Kenntnis des geheimgehaltenen Schlüssels zu prüfen.

Bisher werden durch die digitale Unterschrift die vom Endgerät kommenden digitalen Daten zum Festlegen der Anforderung unterschrieben. Beispielsweise enthalten diese Daten einen Überweisungsbetrag und eine Kontonummer.

Der geheimgehaltene digitale Schlüssel dient zur Durchführung eines symmetrischen oder einer asymmetrischen Verschlüsselungs- bzw. Entschlüsselungsverfahrens und/oder zur Durchführung eines symmetrischen bzw. asymmetrischen Unterschriftsverfahrens. Bei einem symmetrischen Verfahren ist zum Verschlüsseln und zum Entschlüsseln bzw. zum Unterschreiben und zum Prüfen der Unterschrift der gleiche digitale Schlüssel erforderlich. Bei einem asymmetrischen Verschlüsselungs- bzw. Entschlüsselungsverfahren sowie einem asymmetrischen Unterschriftsverfahren bzw. Unterschriftsprüfverfahren gibt es zwei verschiedene Schlüssel für die beiden Teilvorgänge. Der geheimgehaltene digitale Schlüssel wird bei asymmetrischen Verfahren als privater Schlüssel bezeichnet. Der andere Schlüssel wird als öffentlicher Schlüssel bezeichnet und wird in der Regel nicht geheimgehalten.

Die Prüfung der digitalen Unterschrift lässt sich durch das Partnerendgerät beispielsweise durchführen, indem das Partnerendgerät die digitale Unterschrift an ein Endgerät übermittelt, das den geheimgehaltenen Schlüssel speichert. Wird ein asymmetrisches Verfahren eingesetzt, so kann das Partnerendgerät selbst die digitale Unterschrift mit Hilfe des öffentlichen Schlüssels prüfen. In diesem Zusammenhang wird der öffentliche Schlüssel oft vom Endgerät aus zum Partnerendgerät übermittelt. Es muss gewährleistet sein, dass der übermittelte öffentliche Schlüssel nicht manipuliert ist. Dazu lassen sich sogenannte Unterschrifts- bzw. Zertifikatsketten einsetzen, deren Verwendung beispielsweise im Standard X.509 der ITU (International Telecommunication Union - Telecommunication Sector) festgelegt sind.

Die oben erläuterten Maßnahmen bieten bereits für viele Anwendungen einen ausreichenden Schutz, so dass die Akzeptanz der Verfahren in vielen Bereichen hoch ist, z.B. bei digitalen Geldgeschäften. Andererseits gibt es aber beim Auftreten von Unregelmäßigkeiten Beweisschwierigkeiten beim Nachweis der stattgefundenen Vorgänge.

Die Akzeptanz der Verfahren zum Sichern der Datenübertragung für verschiedene Anwendungen hat jedoch auch dazu geführt, dass die Nutzer für jede Anwendung ein anderes Endgerät benutzen müssen. Der Bedienaufwand und der logistische Aufwand für die Benutzer ist deshalb hoch.

Es ist Aufgabe der Erfindung, für die sichere Übertragung von digitalen Daten ein einfaches Verfahren anzugeben, das insbesondere Unregelmäßigkeiten vermeidet und dennoch auftretende Unregelmäßigkeiten eingrenzbar macht. Insbesondere soll das Verfahren auch für mehrere Anwendungen einsetzbar sein und den Bedienaufwand und der logistischen Aufwand für eine Bedienperson verringern. Außerdem sollen für die Durchführung des Verfahrens eingesetzte Chipkarten und Endgeräte sowie ein zugehöriges Programm angegeben werden.

Die das Verfahren betreffende Aufgabe wird durch die im Patentanspruch 1 angegebenen Verfahrensschritte gelöst. Weiterbildungen sind in den Unteransprüchen angegeben.

Die Erfindung geht von der Überlegung aus, dass das Endgerät bei der Übertragung der digitalen Daten die entscheidende Rolle spielt. Lässt sich mit hoher Sicherheit feststellen, dass tatsächlich nur ein bestimmtes Endgerät an der Datenübertragung beteiligt ist, so lassen sich die Ursachen für viele Unregelmäßigkeiten auf einfache Art beseitigen. Außerdem lässt sich beim Auftreten von Unregelmäßigkeiten nachweisen, dass ein betreffendes Endgerät an der Übertragung beteiligt war.

Beim erfindungsgemäßen Verfahren wird in einem Endgerät unter Verwendung eines geheimgehaltenen digitalen Schlüssels eine digitale Unterschrift zu mindestens einem Endgerätedatum erzeugt, welches das Endgerät spezifiziert. Alternativ wird eine unter Verwendung des geheimgehaltenen Schlüssels zu dem Endgerätedatum erstellte digitale Unterschrift im Endgerät gespeichert. Die digitale Unterschrift wird bei beiden Alternativen gemeinsam mit dem Endgerätedatum an ein Partnerendgerät gesendet. Das Partnerendgerät prüft die digitale Unterschrift ohne Kenntnis des geheimgehaltenen Schlüssels. Nur bei Echtheit der digitalen Unterschrift werden vom Endgerät kommende digitale Nutzdaten durch das Partnerendgerät gemäß einer durch die digitalen Nutzdaten festgelegten Anforderung bearbeitet.

Durch die Prüfung der Echtheit der digitalen Unterschrift und deren Verknüpfung mit dem Endgerätedatum lässt sich ein ganz bestimmtes Endgerät ermitteln, das an der digitalen Datenübertragung beteiligt ist. Die Unterschrift gewährleistet, dass Manipulationen zum Vortäuschen der Beteiligung eines Endgerätes erheblich erschwert sind.

Wird die digitale Unterschrift jedes Mal im Endgerät erzeugt, so muss der geheimgehaltene digitale Schlüssel auch im Endgerät verfügbar sein. Bei der Alternative wird im Endgerät nur die digitale Unterschrift nicht jedoch der geheimgehaltene Schlüssel gespeichert. Dies verringert die Möglichkeit für Manipulationen weiter. Im Endgerät lässt sich ein anderer geheimgehaltener Schlüssel speichern, um die digitalen Nutzdaten zum Festlegen der Anforderung zu unterschreiben.

Bei einer nächsten Weiterbildung veranlasst das Partnerendgerät die Speicherung des Endgerätedatum. Das Endgerätedatum wird im Partnerendgerät selbst oder in einem anderen Gerät gespeichert. Steht fest, dass bei der Datenübertragung keine Unregelmäßigkeiten aufgetreten sind, so wird das Endgerätedatum gelöscht. Treten jedoch Unregelmäßigkeiten auf, so lässt sich an Hand des gespeicherten Endgerätedatum feststellen, dass ein ganz bestimmtes Endgerät an der Übertragung der Nutzdaten beteiligt gewesen ist. Zusätzlich zu dem Endgerätedatum werden bei einer Ausgestaltung auch die Nutzdaten zum Festlegen der Anforderung gespeichert.

Bei einer nächsten Weiterbildung werden im Endgerät unter Verwendung des geheimgehaltenen Schlüssels oder eines zweiten geheimgehaltenen Schlüssels, der sich vom ersten geheimgehaltenen Schlüssel unterscheidet, Daten der aktuellen Datenübertragungsverbindung digital unterschrieben und gemeinsam mit der so entstehenden digitalen Unterschrift an das Partnerendgerät gesendet. Durch diese Maßnahme lässt sich die Sicherheit der Datenübertragung weiter erhöhen.

Bei einer nächsten Weiterbildung führt das Partnerendgerät die Prüfung der Unterschrift durch den Aufbau einer Datenfernverbindung zu dem Endgerät eines Dritten aus, der den geheimgehaltenen Schlüssel besitzt. Das Endgerätedatum und die Unterschrift, die zu diesem Endgerätedatum gehört, werden an das Endgerät des Dritten übertragen. Das Endgerät des Dritten führt die Prüfung mittels des geheimgehaltenen Schlüssels aus und übermittelt das Prüfergebnis an das Partnerendgerät. Diese Weiterbildung wird insbesondere dann eingesetzt, wenn ein symmetrisches Unterschriftsverfahren bzw. Verschlüsselungsverfahren eingesetzt wird. Im Endgerät des Dritten lässt sich auch leicht überprüfen, ob der zum Erzeugen der digitalen Unterschrift verwendete Schlüssel beispielsweise als vermisst gemeldet worden oder bereits abgelaufen ist. In jedem dieser Fälle wird die digitale Unterschrift von vornherein, d.h. auch ohne Prüfung, als falsch eingestuft.

Bei einer anderen Weiterbildung ist der geheimgehaltene Schlüssel ein privater Schlüssel eines asymmetrischen Unterschriftsverfahrens. Zur Prüfung der Unterschrift wird der öffentliche Schlüssel des asymmetrischen Verschlüsselungsverfahrens an das Partnerendgerät übermittelt. Das Partnerendgerät prüft mit Hilfe des öffentlichen Schlüssels die Unterschrift. Eine Datenfernverbindung muss bei dieser Weiterbildung nicht aufgebaut werden. Dies ermöglicht eine schnelle Prüfung. Auch bei dieser Weiterbildung kann im Partnerendgerät geprüft werden, ob der öffentliche Schlüssel noch gültig ist.

Bei einer Ausgestaltung des Verfahrens mit asymmetrischen digitalen Schlüsseln wird vom Endgerät an das Partnerendgerät eine digitale Unterschrifts- bzw. Zertifikatskette mit digitalen Unterschriften mehrerer Unterschriftsinstanzen einer digitalen Unterschriftinfrastruktur übermittelt.

Technisch gesehen sind digitale Zertifikate und digitale Unterschriften gleiche technische Elemente. Jedoch ist ein Zertifikat eine digitale Unterschrift, die von einer autorisierten Stelle erzeugt und ausgegeben wird, welcher die Teilnehmer ein gewisses Vertrauen entgegenbringen.

Die Unterschriften der Unterschriftskette enthalten jeweils zu dem öffentlichen Schlüssel einer untergeordneten Unterschriftsinstanz eine Unterschrift der übergeordneten Unterschriftsinstanz. Das Partnerendgerät prüft jeweils ausgehend von der Unterschrift einer höheren Unterschriftsinstanz die Unterschrift der untergeordneten Instanz bis zur digitalen Unterschrift des Endgerätes. Zweckmäßigerweise wird von einer Unterschrift bzw. von einem Zertifikat einer solchen Instanz ausgegangen, die auch dem Betreiber des Partnerendgerätes bekannt ist und der er vertraut. Unterschrifts- bzw. Zertifikatsketten sind beispielsweise aus dem internationalen Standard X.509 der ITU-T bekannt.

Bei einer nächsten Weiterbildung enthält das Endgerätedatum zur Spezifikation des Endgerätes mindestens eine Angabe zu mindestens einer im Endgerät enthaltenen Schaltungseinheit und/oder mindestens eine Angabe zu mindestens einem im Endgerät gespeicherten Programm.

Die Angabe zu einer Schaltungseinheiten betrifft insbesondere:
- einen im Endgerät enthaltenen Prozessor. So haben moderne Prozessoren ein Register, in dem eine vom Hersteller vergebene Prozessornummer gespeichert ist. Diese Prozessornummer lässt sich mit bestimmten Befehlen auslesen und in die digitale Unterschrift einbeziehen.
- eine Endgerätenummer, die durch den Hersteller des Endgerätes oder durch eine das Endgerät ausgebende Stelle festgelegt ist.

Das Auslesen der Prozessornummer oder der Endgerätenummer erfolgt im Rahmen jeder Datenübertragung oder einmal vor der Ausgabe des Endgerätes.

Die Angabe zu einem Programm im Endgerät betrifft insbesondere:
- das Betriebssystem, insbesondere die Version des Betriebssystems,
- ein Anwenderprogramm, insbesondere die Version eines Anwenderprogramms.

Auch die Angaben zur Software lassen sich bei jeder Transaktion bestimmen und dann für die digitale Unterschrift einsetzen. Alternativ werden die Angaben zur Software jedoch von einer das Endgerät ausgebenden Stelle ermittelt und in die digitale Unterschrift eingebunden.

Die Angaben zur Spezifikation des Endgerätes sind Dritten nicht bekannt. Damit ist es für Dritte unmöglich, die Beteiligung eines Endgerätes vorzutäuschen, das nicht in ihrem Besitz ist. Verliert eine Bedienperson ihr Endgerät, so veranlasst sie die Sperrung des Endgerätes für weitere Transaktionen.

Bei einer nächsten Ausgestaltung sind der geheimgehaltene Schlüssel und ein Verfahren zum Erzeugen der Unterschrift bzw. ist die digitale Unterschrift auf einer Chipkarte gespeichert. Chipkarten sind üblicherweise Plastikkarten in der Größe einer Scheck- oder Kreditkarte. In der Chipkarte ist ein Chip eingebettet, der einen Speicher und einen Prozessor enthält. Der Chip ist von außen ohne Zerstörung der Chipkarte nicht zugänglich. Durch den Einsatz von Chipkarten lässt sich die Sicherheit des Verfahrens weiter erhöhen, weil es Chipkarten auf einfache Art erlauben, eine Benutzeridentifikation mit Hilfe einer Geheimzahl durchzuführen. Wird eine Chipkarte eingesetzt, so enthält das Endgerätedatum zur Spezifikation des Endgerätes bei einer Ausgestaltung eine Chipkartenseriennummer. Ist dies die einzige Angabe zur Spezifizierung des Endgerätes, so wird letztlich die Chipkarte spezifiziert, die als Endgerät eingesetzt wird. Werden jedoch andere Angaben zur Spezifizierung des Endgerätes und die Chipkartenseriennummer in die digitale Unterschrift einbezogen, so lässt sich sowohl die Beteiligung der Chipkarte als auch die Beteiligung des betreffenden Endgerätes nachweisen.

Bei einer nächsten Weiterbildung wird die digitale Unterschrift von demselben Endgerät jeweils bei der Durchführung von Anforderungen für verschiedene Anwendungen übertragen, die verschiedene Protokolle zur Übertragung der digitalen Daten erfordern oder die gemäß einem gemeinsamen Übertragungsprotokoll arbeiten. Durch diese Maßnahme erhält der Benutzer ein persönliches Endgerät, das von einer vertrauenswürdigen Stelle ausgegeben wird und das er für vielfältige Anwendungen benutzen kann. Dieses persönliche Endgerät wird ständig vom Benutzer eingesetzt, so dass sein Verlust schnell bemerkt wird. Im Falle eines Verlustes veranlasst der Benutzer die Sperrung des Endgerätes. Der Benutzer benötigt bei der Weiterbildung nur ein persönliches Endgerät, so dass er nur Bedienungsschritte des Endgeräts erlernen muss. Auch muss der Benutzer nicht mehrere Endgeräte mit sich herumtragen. Beispiele für Anwendungen, bei denen das Endgerät eingesetzt wird, sind:
- Ausführen von digitalen Geld- bzw. Bankgeschäften,
- Zugang zu einer Datenverarbeitungsanlage zu erhalten, z.B. zu einem Personalcomputer, zu der Steuereinheit eines Kraftwerks oder zu der Steuereinheit eines medizinischen Geräts,
- ein Fahrzeug öffnen,
- ein elektronisches Schloss an einem Gebäude öffnen,
- Zutritt zu einem Gebäude erhalten, oder
- an einem Zeiterfassungssystem teilnehmen.

Die Sicherheit beim Verwenden des persönlichen Endgerätes, das für eine Vielzahl von Anwendungen einsetzbar ist, lässt sich durch die Einbeziehung biometrischer Merkmale erhöhen. So wird vor Inbetriebnahme des Endgerätes beispielsweise die Eingabe biometrischer Merkmale gefordert, die sich z.B. ausgehend von der Eingabe eines Fingerabdrucks mit Hilfe eines Fingerabdrucksensors ermitteln lassen. Bei anderen Endgeräten werden die biometrischen Merkmale aus einer Sprachprobe oder aus einer Abtastung des Gesichtes des Nutzers gewonnen.

Die Erfindung betrifft außerdem ein Verfahren zum Ausgeben eines Endgerätes, bei dem mindestens ein Endgerätedatum zur Beschreibung eines Endgerätes bei der Abgabe des Endgerätes an einen Nutzer in einer Speichereinheit gespeichert wird, auf die nur der Abgebende Zugriff hat. Im Endgerät wird eine aus dem Datum unter Verwendung eines geheimgehaltenen Schlüssels erstellte digitale Unterschrift gespeichert. Der geheimgehaltene Schlüssel wird entweder nicht im Endgerät gespeichert oder für andere Zwecke im Endgerät gespeichert. Die Sicherheit ist höher, wenn der geheimgehaltene Schlüssel nicht im Endgerät gespeichert wird. Das Verfahren zum Ausgeben des Endgerätes ermöglicht die Durchführung des oben erläuterten erfindungsgemäßen Verfahrens und dessen Weiterbildungen. Somit gelten die oben genannten technischen Wirkungen auch für das Verfahren zum Ausgeben des Endgerätes.

Bei einem alternativen Aspekt der Erfindung wird ein Verfahren zum Ausgeben eines Endgerätes ausgeführt, bei dem mindestens ein Endgerätedatum zur Beschreibung des Endgerätes bei der Abgabe des Endgerätes an einen Nutzer in einer Speichereinheit gespeichert wird, auf die der Abgebende Zugriff hat. Im Endgerät wird ein von außen nicht zugänglicher geheimgehaltener Schlüssel gespeichert. Das Endgerät ist in der Lage, aus dem Endgerätedatum zur Beschreibung des Endgerätes unter Verwendung des geheimgehaltenen Schlüssels eine digitale Unterschrift zu erzeugen. Auch dieses Verfahren ist als Grundlage für das erfindungsgemäße Verfahren gemäß einem Aspekt der Erfindung bzw. dessen Weiterbildungen geeignet. Die oben genannten technischen Wirkungen gelten auch hier.

Weiterhin ist durch die Erfindung eine Chipkarte betroffen, die eine Speichereinheit enthält, in der eine digitale Unterschrift gespeichert ist, die aus mindestens einem Endgerätedatum zur Beschreibung der Chipkarte und/oder zur Beschreibung eines die Chipkarte aufnehmenden Endgerätes mit Hilfe eines geheimgehaltenen Schlüssels erzeugt worden ist. Die Chipkarte enthält einen Prozessor, der die digitale Unterschrift an das Endgerät ausgibt. Auch diese Chipkarte ist für die Durchführung des erfindungsgemäßen Verfahrens gemäß einem Aspekt bzw. einer seiner Weiterbildungen geeignet. Die oben genannten technischen Wirkungen übertragen sich auch auf die Chipkarte.

Bei einem alternativen Aspekt enthält die Chipkarte eine Speichereinheit zum Speichern eines über eine Leseschnittstelle, z.B. über Lesekontakte, der Chipkarte nicht abfragbaren geheimgehaltenen Schlüssels. Die Chipkarte enthält weiterhin einen Prozessor, der aus mindestens einem Endgerätedatum zur Beschreibung der Chipkarte und/oder zur Beschreibung eines die Chipkarte aufnehmenden Endgerätes unter Verwendung des geheimgehaltenen Schlüssels eine digitale Unterschrift erzeugt und über die Lesekontakte ausgibt. Auch für diese Chipkarte gelten bei Einsatz in einem der erfindungsgemäßen Verfahren bzw. einer deren Weiterbildungen die genannten technischen Wirkungen. Es sind auch Endgeräte betroffen, die eine erfindungsgemäße Chipkarte enthalten.

Weiterhin sind Endgeräte betroffen, die zwar keine Chipkarte enthalten, die jedoch Speichereinheiten enthalten, deren Inhalt mit dem Inhalt der Speichereinheiten in den erfindungsgemäßen Chipkarten übereinstimmt. Die oben genannten technischen Wirkungen übertragen sich auch auf das Endgerät.

Bei einer Weiterbildung ist das Endgerät in der Lage, gemäß verschiedenen Protokollen oder gemäß einem gemeinsamen Protokoll für verschiedene Anwendungen Daten zu übertragen. Bei jeder Datenübertragung wird die digitale Unterschrift zu dem das Endgerät kennzeichnenden Endgerätedatum ebenfalls übertragen. Bei Ausgestaltungen lässt sich das Endgerät für mindestens zwei verschiedene Anwendungen einsetzen, z.B. für das Öffnen elektronischer Schlösser, für den Zugriff auf eine Steuereinheit, für das Ausführen von Bankgeschäften oder für die Teilnahme an einem Zeiterfassungssystem.

Die Erfindung betrifft außerdem ein Programm mit einer Befehlsfolge, bei deren Ausführung durch einen Prozessor das erfindungsgemäße Verfahren oder eine seiner Weiterbildungen ausgeführt wird. Die oben genannten technischen Wirkungen gelten auch für das Programm.

Allgemein gilt zu den oben stehenden Erläuterungen, dass sich das Datum zur Spezifizierung des Endgerätes zusätzlich verschlüsseln lässt. Damit kann das Datum vor Dritten geheimgehalten werden und Manipulationen werden erschwert. Zum Verschlüsseln lässt sich ein symmetrisches Verschlüsselungsverfahren oder ein asymmetrisches Verschlüsselungsverfahren einsetzen.

Allgemein gilt weiterhin, dass ein digitaler Schlüssel oder eine digitale Unterschrift letztlich eine Bitfolge ist. Beispiele für Verfahren zum Verschlüsseln bzw. Unterschreiben sind der DES-Algorithmus (Data Encryption Standard) oder der RSA-Algorithmus (Rivest-Shamir-Adleman).

Wird der Standard X.509 der ITU-T beachtet, so lässt sich eine große Sicherheit erreichen. Insbesondere werden die im Standard erläuterten Maßnahmen zur Überprüfung der Gültigkeit einer digitalen Unterschrift ausgeführt, um z.B. den Zeitablauf der Unterschrift festzustellen.

Im Folgenden werden Ausführungsbeispiele der Erfindung an Hand der beiliegenden Zeichnungen erläutert. Darin zeigen:
- Figur 1: eine Prinzipdarstellung eines asymmetrischen Unterschriftsverfahrens gemäß Stand der Technik,
- Figur 2: eine Zertifizierungs-Infrastruktur für eine digitale Zertifikatskette,
- Figur 3: Verfahrensschritte bei der Datenübertragung zwischen einem Endgerät und einem Geldautomaten,
- Figur 4: den Inhalt von Nachrichten des Endgerätes und des Bankautomaten, und
- Figur 5: weitere Verwendungsmöglichkeiten des Endgerätes.

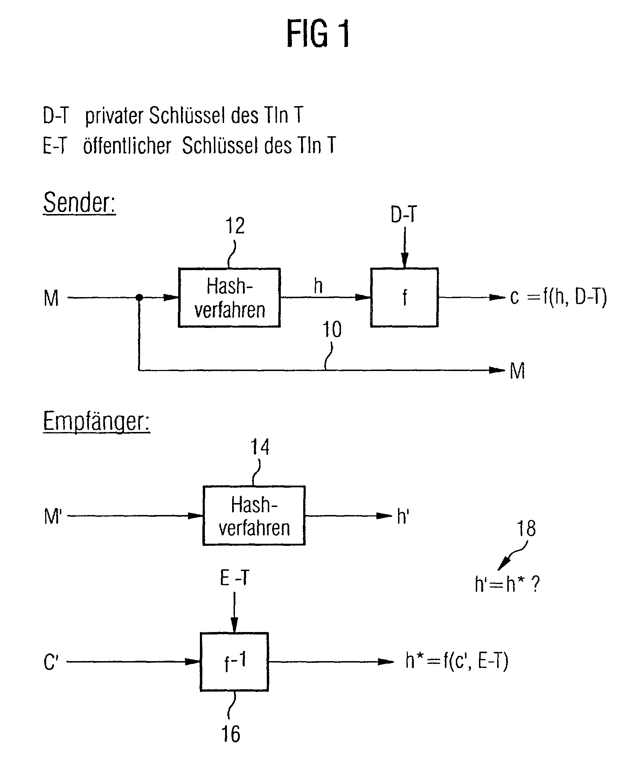

Figur 1 zeigt eine Prinzipdarstellung eines asymmetrischen Unterschriftsverfahrens gemäß Stand der Technik. Bei diesem Verfahren werden ein privater Schlüssel D-T eines Teilnehmers T, wobei D für den Anfang des Worte Decryption (Entschlüsselung) steht, und ein öffentlicher Schlüssel E-T des Teilnehmers T eingesetzt, wobei E für den Anfang des Worte Encryption (Verschlüsselung) steht. Beide Schlüssel D-T und E-T sind Bitfolgen mit einer vorgegebenen Anzahl von Bitstellen. An den einzelnen Bitpositionen sind Binärwerte Null und Eins gespeichert. Der private Schlüssel D-T ist nur dem Teilnehmer T bekannt. Der öffentliche Schlüssel E-T wird dagegen vom Teilnehmer T den Teilnehmern bekannt gemacht, die ihm mit dem öffentlichen Schlüssel E-T verschlüsselte Daten zusenden sollen oder die seine Unterschrift mit Hilfe des öffentlichen Schlüssels E-T überprüfen sollen.

Im oberen Teil der Figur 1 ist das Unterschreiben durch den Teilnehmer T dargestellt. Die zu unterschreibenden Daten M werden verschlüsselt oder unverschlüsselt von einem Sender auf der Seite des Teilnehmers T zu einem Empfänger auf der Seite eines anderen Teilnehmers übertragen, siehe Pfeil 10. Außerdem wird mit Hilfe eines sogenannten Hash-Verfahrens 12 ein Hash-Wert h berechnet, der von allen Bits der zu unterschreibenden Daten M abhängt. Anschließend wird aus dem Hash-Wert h in einem Signaturvorgang 14 unter Verwendung des privaten Schlüssels D-T und einer Signaturfunktion f eine digitale Unterschrift c erzeugt. Die digitale Unterschrift c ist eine Funktion des Hash-Wertes h und des privaten Schlüssels D-T. Danach wird auch die zu den unterschreibenden Daten M gehörende digitale Unterschrift c vom Sender zu dem Empfänger übertragen.

Der Empfänger empfängt unterschriebene Daten M' und eine Unterschrift c'. Um zu prüfen, ob die digitale Unterschrift c' echt ist, d.h. unverfälscht, und um zu prüfen, ob die unterschriebenen Daten M' mit den zu unterschreibenden Daten M übereinstimmen, wird in einem Hash-Verfahren 14 auf der Seite des Empfängers erneut ein Hash-Wert h' berechnet. Die Hash-Verfahren 12 und 14 sind gleich. Außerdem wird auf der Seite des Empfängers ein Prüfvorgang 16 ausgeführt, in dem mit Hilfe des öffentlichen Schlüssels E-T und mit Hilfe einer Prüffunktion f⁻¹ aus der Unterschrift c' ein Hash-Wert h* ermittelt wird, dessen Wert mit dem Wert des Hash-Wertes h übereinstimmen sollte, falls keine Manipulationen aufgetreten sind. Der Hash-Wert h* ist eine Funktion der empfangenen Unterschrift c' und des öffentlichen Schlüssels E-T. Die Prüffunktion f⁻¹ ist eine Partnerfunktion zur Signaturfunktion f.

Dann werden in einem Prüfschritt 18 die Hash-Werte h' und h* verglichen. Stimmen beide Werte überein, so wurden die unterschriebenen Daten M' nicht verfälscht und die Unterschrift c' ist echt. Weicht dagegen der Hash-Wert h' vom Hash-Wert h* ab, so wurden die Daten M' verfälscht bzw. die Unterschrift c' ist gefälscht.

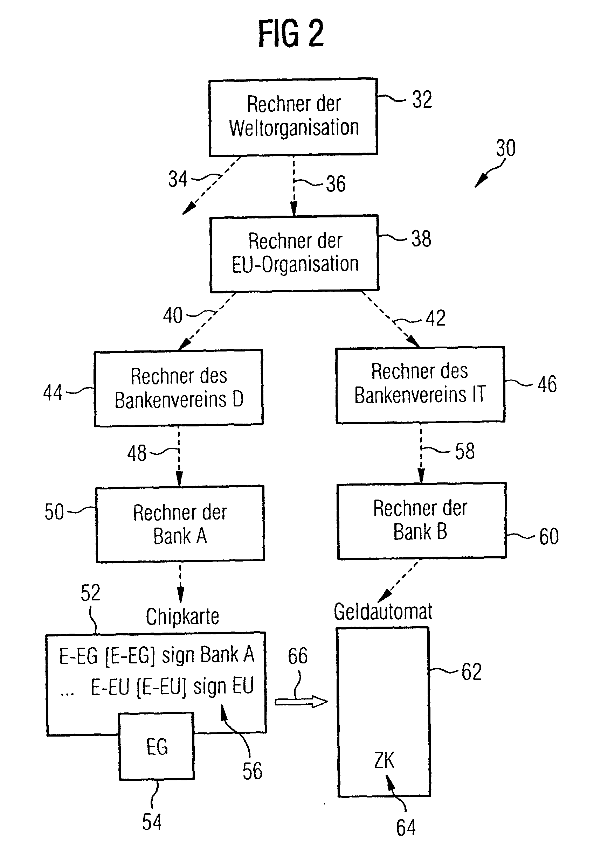

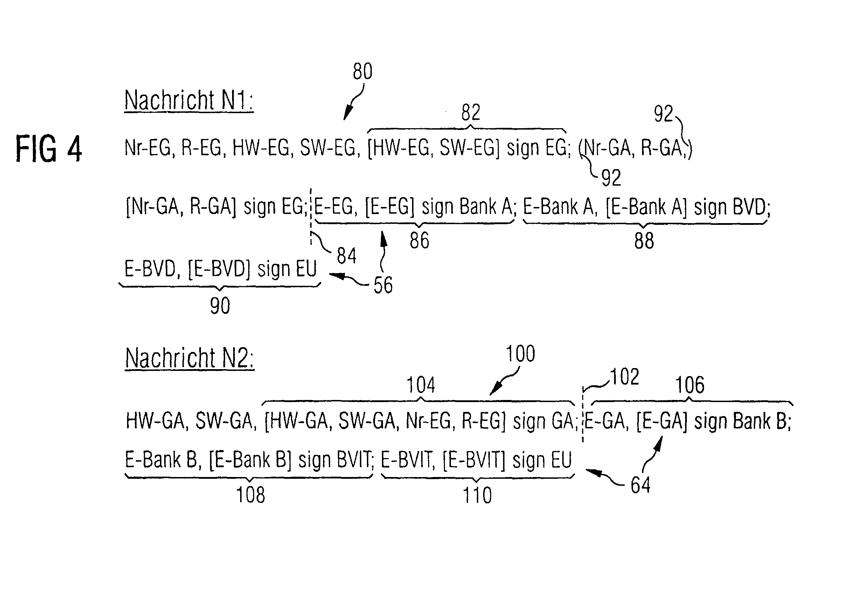

Figur 2 zeigt eine Zertifikats-Infrastruktur 30 für eine digitale Zertifikatskette, die unten an Hand der Figur 4 näher erläutert wird. Zur Infrastruktur 30 gehört ein Rechner 32 einer Weltorganisation. Der Weltorganisation sind mehrere Organisationen zum Zertifizieren untergeordnet, z.B. eine Zertifizierungsorganisation in den USA, siehe Pfeil 34 und eine Zertifizierungsorganisation in Europa, kurz EU-Organisation genannt, siehe Pfeil 36. Die EU-Organisation nutzt einen Rechner 38. So erhält die EU-Organisation für die von ihr eingesetzten öffentlichen Schlüssel E-EU Zertifikate der Weltorganisation. Diese Zertifikate enthalten den jeweiligen öffentlichen Schlüssel E-EU und eine digitale Unterschrift der Weltorganisation WO über die digitalen Daten des öffentlichen Schlüssels E-EU der EU-Organisation. Mit Hilfe der öffentlichen Schlüssel E-WO der Weltorganisation lässt sich die Echtheit der Zertifikate prüfen.

Der EU-Organisation sind weitere Organisationen untergeordnet, von denen in Figur 2 ein Bankenverein in Deutschland und ein Bankenverein in Italien berücksichtigt sind, siehe Pfeile 40 und 42. Der Bankenverein Deutschland nutzt im Rahmen der Zertifizierungskette einen Rechner 44. In einer Speichereinheit dieses Rechners 44 werden öffentliche Schlüssel E-BVD des Bankenvereins Deutschland gespeichert. Mit Hilfe des Rechners 38 werden diese öffentlichen Schlüssel E-BVD von der EU-Organisation zertifiziert. Die Zertifikate werden dem Bankenverein Deutschland zur Weiterleitung an untergeordnete Organisationen oder zur eigenen Nutzung übergeben.

Ein Rechner 46 des Bankenvereins Italiens dient für ähnliche Zwecke. Die öffentlichen Schlüssel E-BVIT des Bankenvereins Italiens werden ebenfalls durch die EU-Organisation mit Hilfe des Rechners 38 zertifiziert. Die Zertifikate werden vom Bankverein Italien an untergeordnete Organisationen weitergegeben.

In Figur 2 ist eine dem Bankenverein Deutschland untergeordnete Bank A berücksichtigt, siehe Pfeil 48. Die Bank A benutzt einen Rechner 50 im Rahmen der Zertifizierungskette.

Öffentliche Schlüssel E-BankA der Bank A werden vom Bankenverein Deutschland mit Hilfe des Rechners 44 zertifiziert. Die Zertifikate werden auf dem Rechner 50 gespeichert und von der Bank A eingesetzt.

Die Bank A gibt an ihre Kunden mobile Endgeräte 54 aus, die z.B. Chipkarten 52 enthalten und die mit einem öffentlichen Endgeräteschlüssel E-EG arbeiten. Das Endgerät verfügt über eine Datenübertragungsmöglichkeit, z.B. über eine Funkstrecke und/oder über eine lokale Schnittstelle, z.B. eine Infrarotschnittstelle. Jedoch lässt sich die Chipkarte auch einzeln einsetzen, wenn Sie in ortsfeste Lesegeräte eingesteckt wird. Der Endgeräteschlüssel E-EG ist für alle ausgegebenen Endgeräte verschieden. Die Bank A zertifiziert die öffentlichen Endgeräteschlüssel E-EG und hinterlegt Zertifikate in den Endgeräten 54. Das Zertifikat ist in Figur 2 durch die Buchstabenfolge E-EG[E-EG]sign Bank A dargestellt. Dabei bezeichnet die Abkürzung "sign" die Signatur bzw. digitale Unterschrift der Bank A. Innerhalb der eckigen Klammern stehen die Daten, die durch die digitale Unterschrift unterschrieben sind, d.h. hier der öffentliche Schlüssel E-EG des Endgerätes 54. Auf der Chipkarte 52 sind auch die Zertifikate der übergeordneten Organisationen der Bank A gespeichert, d.h. die Zertifikate des Bankenvereins Deutschlands und der EU-Organisation. Die Zertifikate sind in einer Zertifikatskette 56 gespeichert, deren Aufbau unten an Hand der Figur 4 näher erläutert wird.

In Figur 2 ist eine dem Bankenverein Italiens angehörende Bank B berücksichtigt, siehe Pfeil 58. Die Bank B benutzt im Rahmen der Infrastruktur 30 einen Rechner 60. Die Bank B erhält vom Bankenverein Italiens öffentliche Schlüssel E-BankB, private Schlüssel D-BankB und Zertifikate über die öffentlichen Schlüssel E-BankB. Diese Schlüssel und Zertifikate werden in einer Speichereinheit des Rechners 60 gespeichert und von der Bank B verwendet. Beispielsweise erhalten Kunden der Bank B ähnliche Chipkarten 52 und 54 wie die Kunden der Bank A. Jedoch enthalten diese Chipkarten Zertifizierungsketten über den rechten in Figur 2 dargestellten Zertifizierungszweig.

Die Bank B benutzt einen Geldautomaten 62, in dem eine Zertifizierungskette 64 hinterlegt ist. Die Zertifizierungskette 64 enthält Zertifikate der Bank B, des Bankvereins Italiens und der EU-Organisation. Die Zertifizierungskette 64 wird unten an Hand der Figur 4 näher erläutert.

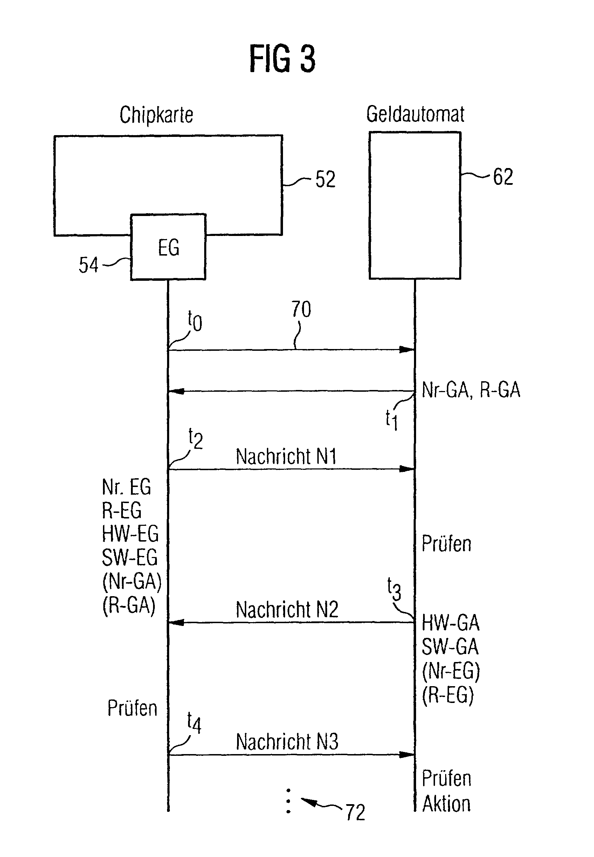

Der Kunde der Bank A kann mit Hilfe der Chipkarte 52 und mit Hilfe des Endgerätes 54 auch Geld an dem Geldautomaten 62 der Bank B in Italien erhalten, siehe Pfeil 66. Einige der dabei ausgeführten Vorgänge werden im Folgenden an Hand der Figur 3 erläutert.

Figur 3 zeigt Verfahrensschritte bei der Datenübertragung zwischen dem Endgerät 54 und dem Geldautomaten 62. Zu einem Zeitpunkt t0 wird zwischen dem Endgerät 54 und dem Geldautomaten 62 eine Datenübertragungsverbindung 70 aufgebaut. Das Endgerät 54 meldet sich beim Geldautomaten 62 an und startet ein Identifizierverfahren, das auch als Challenge-Response-Verfahren bezeichnet wird. Zu einem folgenden Zeitpunkt t1 sendet der Geldautomat 62 eine laufende Nummer Nr-GA und eine Zufallszahl R-GA an das Endgerät 54.

Nach dem Empfang dieser Daten erzeugt das Endgerät 54 eine Nachricht N1 zu einem Zeitpunkt t2. Die Nachricht N1 enthält eine vom Endgerät 54 erzeugte laufende Nummer Nr-EG, eine vom Endgerät 54 erzeugte Zufallszahl R-EG. Außerdem sind eine Prozessornummer HW-EG des im Endgerät 54 eingesetzten Prozessors, eine Software-Konfigurationsnummer SW-EG zur Beschreibung der Programmkomponenten im Endgerät 54, die zuvor empfangene laufende Nummer Nr-GA und die zuvor empfangene Zufallszahl R-GA sowie eine Unterschrift zu diesen Daten in der Nachricht N1 enthalten. Der Aufbau der Nachricht N1 wird unten an Hand der Figur 4 näher erläutert. Der Geldautomat 62 prüft nach dem Empfang der Nachricht N1 die in dieser Nachricht N1 enthaltenen Angaben. Die dabei ausgeführten Prüfschritte richten sich zum einen auf die Prüfung der in der Nachricht N1 enthaltenen Zertifikate. Andererseits wird überprüft, ob die laufende Nummer Nr-GA und die Zufallszahl R-GA mit dem zuvor vom Geldautomaten 62 ausgesendeten Daten übereinstimmt. Werden bei der Prüfung keine Unregelmäßigkeiten entdeckt, so sendet der Geldautomat zu einem Zeitpunkt t3 eine Nachricht N2, deren Aufbau unten an Hand der Figur 4 näher erläutert wird.

Die Nachricht N2 enthält unter anderem eine Prozessornummer HW-GA eines im Geldautomaten 62 eingesetzten Prozessors. Weiterhin enthält die Nachricht N2 eine Software-Konfigurationsnummer SW-GA zur Beschreibung der Software-Konfiguration im Geldautomaten 62. Der Geldautomat 62 sendet auch die laufende Nummer Nr-EG und die Zufallszahl R-EG bzw. eine Unterschrift zu diesen Daten an das Endgerät 54 zurück. Im Geldautomaten 62 werden außerdem die Prozessornummer HW-EG und die Software-Konfigurationsnummer SW-EG zum Prüfen späterer Beanstandungen gespeichert.

Nach dem Empfang der Nachricht N2 führt das Endgerät 54 eine Prüfung der in der Nachricht N2 enthaltenen Angaben durch. Dabei werden unter anderem die Zertifikate überprüft. Außerdem wird geprüft, ob die Unterschrift zu der laufenden Nummer Nr-EG und zu der Zufallszahl R-EG die zum Zeitpunkt t2 gesendeten Angaben Nr-EG und R-EG bestätigt. Das Endgerät 54 vermerkt außerdem die Prozessornummer HW-GA und die Software-Konfigurationsnummer SW-GA für die Prüfung späterer Beanstandungen.

Durch den Austausch der Nachrichten N1 und N2 und die ausgeführten Prüfschritte wird sichergestellt, dass ein von der Bank A ausgegebenes Endgerät 54 und ein Geldautomat 62 der Bank B an den Transaktionen beteiligt sind. Zu einem Zeitpunkt t4 sendet das Endgerät 54 Daten mit einer Anforderung für eine Überweisung in einer Nachricht N3 an den Geldautomaten 62. Die Nachricht N3 enthält beispielsweise den auszuzahlenden Geldbetrag, das aktuelle Datum, die aktuelle Uhrzeit, den momentanen Ort, eine um den Wert Eins erhöhte laufende Nummer Nr-EG und die Zufallszahl R-EG. Diese Daten sind mit dem privaten Schlüssel D-EG des Endgerätes 54 unterschrieben.

Der Geldautomat 62 prüft die in der Nachricht N3 enthaltenen Angaben und veranlasst die Auszahlung des Geldbetrages bei positivem Prüfergebnis, siehe durch Punkte angedeutete weitere Verfahrensschritte 72.

Figur 4 zeigt den Inhalt der Nachrichten N1 und N2. Die Nachricht N1 enthält einen Datenteil 80 und die Zertifikatskette 56. Der Datenteil 80 enthält in unverschlüsselter Form die laufende Nummer Nr-EG, die vom Endgerät 54 erzeugte Zufallszahl R-EG, die Prozessornummer HW-EG des im Endgerät 54 enthaltenen Prozessors und die Software-Konfigurationsnummer SW-EG. Außerdem enthält der Datenteil 80 ein Zertifikat 82, das bei der Ausgabe des Endgerätes 54 auf der Chipkarte 52 gespeichert worden ist. Das Zertifikat 82 ist die digitale Unterschrift zu der Prozessornummer HW-EG und zu der Software-Konfigurationsnummer SW-EG erzeugt mit Hilfe des privaten digitalen Schlüssels D-EG des Endgerätes 54. Darauffolgend sind in der Nachricht N1 die laufende Nummer Nr-GA und die Zufallszahl R-GA gespeichert, die jedoch bereits im Geldautomaten 62 bekannt sind und somit nicht unbedingt übertragen werden müssen, siehe Klammern 92 in Figur 4. Eine digitale Unterschrift [Nr-GA, R-GA] sign EG wurde über die in der eckigen Klammer angegebenen Angaben mit Hilfe des privaten Schlüssels D-EG im Endgerät 54 erzeugt. Der Datenteil 80 ist durch eine gestrichelte Linie 84 in Figur 4 von der Zertifikatskette 56 abgegrenzt.

Die Zertifikatskette 56 enthält ein Zertifikat 86, mit dem die Bank A die Echtheit des öffentlichen Schlüssels E-EG zertifiziert. Danach folgt in der Zertifikatskette 56 ein Zertifikat 88, mit dem der Bankenverein Deutschland die Echtheit des öffentlichen Schlüssels E-BankA der Bank A zertifiziert. Ein nächstes Zertifikat 90 wurde von der EU-Organisation ausgegeben, um die Echtheit des öffentlichen Schlüssels E-BVD des Bankenvereins Deutschland zu zertifizieren.

Der Geldautomat 62 der Bank B hat Zugriff auf den öffentlichen Schlüssel E-EU der europäischen Organisation. Mit Hilfe dieses Schlüssels kann er die Echtheit des Zertifikats 90 prüfen. Dabei wird letztlich die digitale Unterschrift der europäischen Organisation geprüft. Ist das Zertifikat 90 echt, so ist auch der mit dem Zertifikat 90 zertifizierte öffentliche Schlüssel E-BVD des Bankenvereins Deutschlands vertrauenswürdig. Mit Hilfe dieses öffentlichen Schlüssels E-BVD überprüft der Geldautomat 62 anschließend die Echtheit des Zertifikats 88. Dabei wird wieder das oben an Hand der Figur 1 erläuterte Verfahren ausgeführt. Stimmen die Hash-Werte h' und h* überein, so kann auch von der Vertrauenswürdigkeit des öffentlichen Schlüssels E-BankA ausgegangen werden. Daraufhin benutzt der Geldautomat 62 den öffentlichen Schlüssel E-BankA zur Prüfung des Zertifikats 86 für den öffentlichen Schlüssel E-EG des Endgerätes 54 . Wird festgestellt, dass auch das Zertifikat 86 echt ist, so benutzt der Geldautomat 62 den öffentlichen Schlüssel E-EG des Endgerätes 54 zur Prüfung der Unterschrift für die laufende Nummer Nr-GA und die Zufallszahl R-GA. Sind die Angaben korrekt, so wird mit Hilfe des öffentlichen Schlüssels E-EG das Zertifikat 82 geprüft. Ist das Zertifikat 82 echt, so wird anschließend das oben an Hand der Figur 3 erläuterte Verfahren durchgeführt, wobei auch die Nachricht N2 erzeugt wird. Stellt der Geldausgabeautomat 62 fest, dass eines der Zertifikate 82, 86, 88 oder 90 falsch ist bzw. die digitale Unterschrift [Nr-GA, RGA] sign EG unecht ist oder nicht zu den Angaben Nr-GA und R-GA passt, so wird die Kommunikation zum Endgerät 54 abgebrochen.

In Figur 4 ist außerdem der Aufbau der Nachricht N2 dargestellt. Die Nachricht N2 enthält einen Datenteil 100 und die Zertifizierungskette 64, die in Figur 4 durch eine gestrichelte Linie 102 voneinander getrennt sind. Der Datenteil 100 enthält die Prozessornummer HW-GA, die Software-Konfigurationsnummer SW-GA und eine digitale Unterschrift 104, die mit Hilfe eines privaten Schlüssels D-GA erzeugt worden ist und die Prozessornummer HW-GA, die Software-Konfigurationsnummer SW-GA, die laufende Nummer Nr-EG und die Zufallsnummer R-EG unterschreibt. Die laufende Nummer Nr-EG und die Zufallszahl R-EG selbst sind in der Nachricht N2 nicht enthalten, weil sie dem Endgerät 54 bekannt sind. Die sich an die digitale Unterschrift 104 anschließende Zertifikatskette 64 enthält ein Zertifikat 106 der Bank B für den öffentlichen Schlüssel E-GA des Geldautomaten 62. Ein weiteres Zertifikat 108 der Zertifikatskette 64 wurde durch den Bankenverein Italiens ausgestellt und zertifiziert die Echtheit des öffentlichen Schlüssels E-BankB der Bank B. Ein weiteres Zertifikat 110 der Zertifikatskette 64 wurde von der EU-Organisation ausgestellt und zertifiziert die Echtheit des öffentlichen Schlüssels E-DVIT des Bankenvereins Italiens.

Im Endgerät 54 ist der öffentliche Schlüssel E-EU der europäischen Organisation gespeichert. Mit Hilfe dieses öffentlichen Schlüssels E-EU überprüft das Endgerät 54 das Zertifikat 110. Die Echtheit des öffentlichen Schlüssels E-BVIT wird festgestellt. Anschließend prüft das Endgerät 54 mit dem öffentlichen Schlüssel E-BVIT die Echtheit des Zertifikats 108. Es sei angenommen, dass auch hier Echtheit festgestellt wird. Damit ist der öffentliche Schlüssel E-BankB der Bank B vertrauenswürdig. Mit Hilfe des öffentlichen Schlüssels E-BankB wird anschließend im Endgerät 54 die Echtheit des Zertifikats 106 geprüft. Dabei wird festgestellt, dass der öffentliche Schlüssel E-GA des Geldautomaten 62 vertrauenswürdig ist. In einem nächsten Schritt wird der öffentliche Schlüssel E-GA zur Prüfung der Unterschrift 104 eingesetzt. Wird die Echtheit der Unterschrift 104 festgestellt, so werden die oben an Hand der Figur 34 erläuterten Verfahrensschritte weiter ausgeführt.

Findet das Endgerät 54 bei seiner Prüfung der Zertifikatkette 64 oder des Datenteils 100 Unregelmäßigkeiten, so wird die Kommunikation mit dem Geldautomaten 62 abgebrochen.

Bei einem anderen Ausführungsbeispiel werden in der Nachricht N1 und/oder in der Nachricht N2 zum Unterschreiben der endgerätspezifischen Daten HW-EG, SW-EG bzw. HW-GA und SW-GA separate Schlüssel eingesetzt. In diesem Fall sind in den Nachrichten N1 bzw. N2 jeweils zwei Zertifikatketten gespeichert.

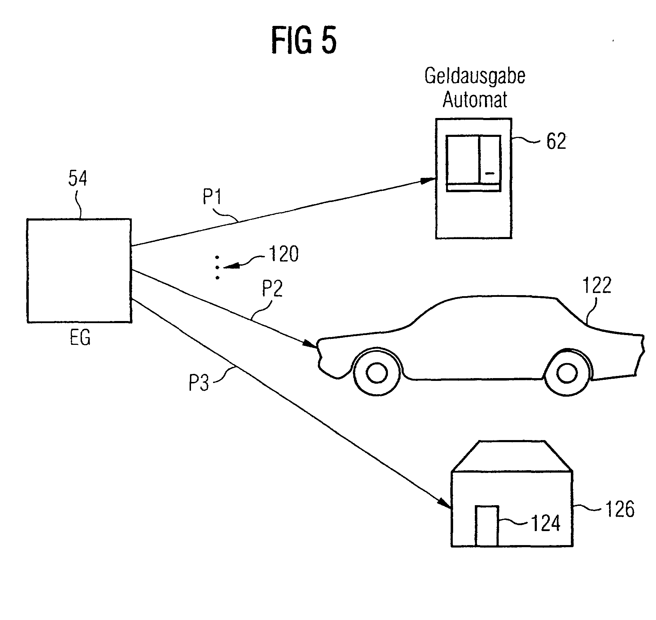

Figur 5 zeigt weitere Verwendungsmöglichkeiten des Endgerätes 54. Die oben an Hand der Figuren 1 bis 4 erläuterte Anwendung für Bankgeschäfte werden gemäß einem Protokoll P1 ausgeführt. Das Protokoll P1 wurde von mehreren Bankorganisationen festgelegt.

Dasselbe Endgerät 54 dient jedoch noch für eine Vielzahl anderer Anwendungen 120, die durch Punkte angedeutet sind. Darüber hinaus wird das Endgerät auch zum Aufschließen eines Kraftfahrzeugs 122 eingesetzt. Zur Datenübertragung zwischen Kraftfahrzeug 122 und Endgerät 54 wird ein Protokoll P2 eingesetzt, das sich vom Protokoll P1 unterscheidet und das von mehreren Herstellen von Kraftfahrzeugen festgelegt worden ist. Beim Öffnen des Kraftfahrzeugs 122 mit Hilfe des Endgerätes 54 laufen ähnliche Verfahrensschritte ab, wie sie oben an Hand der Figur 3 erläutert worden sind. Insbesondere sendet das Endgerät 54 das Zertifikat 82 an das Kraftfahrzeug 122. Ein Steuereinheit des Kraftfahrzeugs 122 überprüft das Zertifikat 82 mit Hilfe des öffentlichen Schlüssels E-EG des Endgerätes 54. Gegebenenfalls wird auch eine Zertifikatskette eingesetzt. Jedoch lässt sich die Echtheit des öffentlichen Schlüssels E-EG auch auf andere Weise ermitteln. Bei der Datenübertragung zwischen Endgerät 54 und Kraftfahrzeug 122 wird im Ausführungsbeispiel keine Nachricht N2 übertragen, weil die Steuereinheit des Kraftfahrzeugs 122 den Öffnungsvorgang an Hand eines Schlüsselcodes ausführt, der vom Endgerät 54 gesendet wird. Das Endgerät 54 benötigt deshalb keine Bestätigung, dass das richtige Kraftfahrzeug 122 geöffnet wird.

Bei einer nächsten Anwendungsmöglichkeit des Endgeräts 54 wird das Endgerät 54 zum Öffnen einer Haustür 124 eines Hauses 126 eingesetzt. Die Haustür 124 ist ebenfalls mit einem elektronischen Schloss gesichert. Bei der Datenübertragung zwischen Endgerät 54 und dem elektronischen Schloss der Haustür 124 wird ein Protokoll P3 eingesetzt, das von Schlossherstellern festgelegt worden ist. Das Protokoll P3 ähnelt dem Protokoll P2. Beim Öffnen der Haustür 124 laufen ähnliche Verfahrensschritte ab, wie beim Öffnen des Kraftfahrzeugs 122.

## Patentansprüche

1. Verfahren zum Sichern von Datenübertragungen,
bei dem in einem Endgerät (54) unter Verwendung eines geheimgehaltenen Schlüssels (D-EG) eine digitale Unterschrift (82) zu mindestens einem Endgerätedatum (HW-EG, SW-EG) erzeugt wird, welches das Endgerät (54) spezifiziert,
oder bei dem in dem Endgerät (54) eine unter Verwendung des geheimgehaltenen Schlüssels (D-EG) zu dem Endgerätedatum (HW-EG, SW-EG) erstellte digitale Unterschrift (82) gespeichert wird,
die digitale Unterschrift (82) gemeinsam mit dem Endgerätedatum (HW-EG) an ein Partnerendgerät (62) gesendet wird,
das Partnerendgerät (62) die digitale Unterschrift (82) ohne Kenntnis des geheimgehaltenen Schlüssels (D-EG) prüft,
und bei dem nur bei Echtheit der digitalen Unterschrift (82) vom Endgerät (54) kommende digitale Nutzdaten (N3) durch das Partnerendgerät (62) gemäß einer durch die digitalen Nutzdaten (N3) festgelegten Anforderung bearbeitet werden.

2. Verfahren nach Anspruch 1, **dadurch gekennzeichnet, dass** das Partnerendgerät (62) die Speicherung des Endgerätedatum (HW-EG) veranlasst, vorzugsweise gemeinsam mit den Nutzdaten (N3).

3. Verfahren nach einem der vorhergehenden Ansprüche, **dadurch gekennzeichnet, dass** im Endgerät (54) unter Verwendung des geheimgehaltenen Schlüssels (D-EG) oder eines zweiten geheimgehaltenen Schlüssels, der sich vom ersten geheimgehaltenen Schlüssel unterscheidet, Daten (R-EG) der aktuellen Datenübertragungsverbindung zum Partnerendgerät (62) digital unterschrieben werden und gemeinsam mit der digitalen Unterschrift (82) an das Partnerendgerät (62) gesendet werden.

4. Verfahren nach einem der vorhergehenden Ansprüche, **dadurch gekennzeichnet, dass** das Partnerendgerät (62) zur Prüfung der Unterschrift eine Datenfernverbindung zu dem Endgerät (50) eines Dritten aufbaut, der den geheimgehaltenen Schlüssel (D-EG) ausgegebenen hat,
dass das Endgerätedatum (HW-EG) und die Unterschrift (82) an das Endgerät (50) des Dritten übertragen werden,
dass das Endgerät (50) des Dritten die Prüfung mittels des geheimgehaltenen Schlüssels (D-EG) veranlasst und das Prüfergebnis an das Partnerendgerät (62) übermittelt.

5. Verfahren nach einem der vorhergehenden Ansprüche, **dadurch gekennzeichnet, dass** der geheimgehaltene Schlüssel (D-EG) ein privater Schlüssel eines asymmetrischen Unterschriftsverfahrens ist,
dass zur Prüfung der Unterschrift der öffentliche Schlüssel (E-EG) des asymmetrischen Unterschriftverfahrens an das Partnerendgerät (62) übermittelt wird,
und dass die Unterschrift (82) mit Hilfe des öffentlichen Schlüssels (E-EG) geprüft wird.

6. Verfahren nach Anspruch 5, **dadurch gekennzeichnet, dass** vom Endgerät (52) an das Partnerendgerät (62) eine digitale Unterschriftkette (56) mit digitalen Unterschriften (86 bis 90) mehrerer Unterschriftsinstanzen einer digitalen Unterschriftsinfrastruktur (30) übermittelt wird,
wobei die Unterschriften (86 bis 90) einer übergeordneten Unterschriftsinstanz jeweils den öffentlichen Schlüssel (E) einer untergeordneten Unterschriftsinstanz betreffen,
und wobei das Partnerendgerät (62) ausgehend von der Unterschrift (96) einer höheren Unterschriftsinstanz die Unterschrift (86, 88) einer untergeordneten Unterschriftsinstanz vorzugsweise bis zur digitalen Unterschrift (82) für das Endgerätedatum (HW-EG) überprüft.

7. Verfahren nach einem der vorhergehenden Ansprüche, **dadurch gekennzeichnet, dass** das Endgerätedatum (HW-EG) enthält:
mindestens eine Angabe (HW-EG) zu Schaltungseinheiten des Endgerätes, vorzugsweise zu einer Prozessornummer eines im Endgerät (54) enthaltenen Prozessors und/oder eine Endgerätenummer des Endgerätes (54),
und/oder mindestens eine Angabe (SW-EG) zu einem Programm im Endgerät, vorzugsweise zum Betriebssystem, insbesondere zur Version des Betriebssystems und/oder zu einem Anwenderprogrammen, insbesondere zur Version des Anwenderprogramms.

8. Verfahren nach einem der vorhergehenden Ansprüche, **dadurch gekennzeichnet, dass** der geheimgehaltene Schlüssel (D-EG) und ein Verfahren zum Erzeugen der Unterschrift (82) auf einer Chipkarte gespeichert sind oder dass die Unterschrift (82) auf einer Chipkarte (52) gespeichert ist,
und/oder dass das Endgerätedatum (HW-EG) vorzugsweise eine Chipkarten-Seriennummer enthält.

9. Verfahren nach einem der vorhergehenden Ansprüche, **dadurch gekennzeichnet, dass** die digitale Unterschrift (82) von demselben Endgerät (54) jeweils beim Durchführen von Anforderungen für verschiedene Anwendungen übertragen wird, vorzugsweise bei Anforderungen für Bankgeschäfte und/oder bei Anforderungen zum Öffnen von Schlössern und/oder bei Anforderungen zum Zugriff auf eine Datenverarbeitungsanlage und/oder bei Anforderungen zur Teilnahme an einem Zeiterfassungssystem.

10. Verfahren zum Ausgeben eines Gerätes (54),
bei dem mindestens ein Endgerätedatum (HW-EG) zur Beschreibung eines Endgerätes (52) bei der Abgabe des Endgerätes (54) an einen Nutzer in einer Speichereinheit (50) gespeichert wird, auf die der Abgebende Zugriff hat,
und bei dem im Endgerät (54) eine aus dem Endgerätedatum (HW-EG) unter Verwendung eines geheimgehaltenen Schlüssels (D-EG) erstellte digitale Unterschrift (32) gespeichert wird.

11. Verfahren zum Ausgeben eines Endgeräts (54),
bei dem mindestens ein Endgerätedatum (HW-EG) zur Beschreibung eines Endgerätes (50) bei der Abgabe des Endgerätes (54) an einen Nutzer einer Speichereinheit (50) gespeichert wird, auf die der Abgebende Zugriff hat,
bei dem im Endgerät (54) ein von außen nicht zugänglicher geheimgehaltener Schlüssel (D-EG) gespeichert wird,
und bei dem das Endgerät (54) aus dem Endgerätedatum (HW-EG) unter Verwendung des geheimgehaltenen Schlüssels (D-EG) eine digitale Unterschrift (82) erzeugt.

12. Verfahren nach Anspruch 10 oder 11, **dadurch gekennzeichnet, dass** das Endgerät (54) und die digitale Unterschrift (82) so aufgebaut sind, dass sie zur Durchführung eines Verfahrens nach einem der Ansprüche 1 bis 9 geeignet sind.

13. Chipkarte (52),
mit einer Speichereinheit, in der eine digitale Unterschrift (82) gespeichert ist, die aus mindestens einem Endgerätedatum (HW-EG) zur Beschreibung der Chipkarte (52) und/oder zur Beschreibung eines die Chipkarte (52) aufnehmenden Endgerätes (54) mit Hilfe eines geheimgehaltenen Schlüssels (D-EG) erzeugt worden ist,
und mit einem Prozessor, der die Unterschrift (82) an das Endgerät (54) ausgibt oder die Ausgabe veranlasst.

14. Chipkarte (52),
mit einer Speichereinheit zum Speichern eines über eine Leseschnittstelle nicht abfragbaren geheimgehaltenen Schlüssels (D-EG),
und mit einem Prozessor, der aus Daten zur Beschreibung der Chipkarte (52) und/oder zur Beschreibung eines die Chipkarte (52) aufnehmenden Endgerätes (54) unter Verwendung des geheimgehaltenen Schlüssels (D-EG) eine digitale Unterschrift (82) erzeugt und über die Leseschnittstelle ausgibt oder die Ausgabe veranlasst.

15. Endgerät (54), **dadurch gekennzeichnet, dass** es eine Chipkarte nach Anspruch 13 oder 14 enthält.

16. Endgerät mit einer Speichereinheit, in der eine digitale Unterschrift (82) gespeichert ist, die aus mindestens einem Endgerätedatum (HW-EG) zur Beschreibung des Endgerätes (54) mit Hilfe eines geheimgehaltenen Schlüssels (D-EG) erzeugt worden ist,
und mit einem Prozessor, der die Unterschrift (32) versendet oder das Versenden veranlasst.

17. Endgerät (54),
mit einer Speichereinheit zum Speichern eines von außen nicht abfragbaren geheimgehaltenen Schlüssels (D-EG),
und mit einem Prozessor, der aus mindestens einem Endgerätedatum zur Beschreibung des Endgerätes (54) unter Verwendung des geheimgehaltenen Schlüssels (D-EG) eine digitale Unterschrift (82) erzeugt und versendet.

18. Endgerät nach einem der Ansprüche 15 bis 17, **dadurch gekennzeichnet, dass** es in der Lage ist, gemäß verschiedenen Protokollen (P1 bis P3) oder gemäß einem gemeinsamen Protokoll Daten für verschiedene Anwendungen zu übertragen,
vorzugsweise Daten zum Öffnen eines elektronischen Schlosses und/oder Daten zur Teilnahme an einer Anwesenheitserfassungseinrichtung und/oder Daten zum Zugriff auf eine Datenverarbeitungsanlage und/oder Daten zum Durchführen von Bankgeschäften.

19. Endgerät (54) nach einem der Ansprüche 15 bis 18, **dadurch gekennzeichnet, dass** das Endgerät (54) so aufgebaut ist, dass bei seinem Betrieb ein Verfahren nach einem der Ansprüche 1 bis 12 ausgeführt wird.

20. Programm mit einer Befehlsfolge, bei deren Ausführung durch einen Prozessor ein Verfahren nach einem der Ansprüche 1 bis 12 ausgeführt wird.
